# EUROPEAN PATENT APPLICATION

(11) **EP 4 523 822 A1**
(43) Date of publication of application: **19.03.2025**
(21) Application number: 24197722.2
(22) Date of filing: 30.08.2024
(51) Int. Cl.: B23B 31/08, B23B 31/107, B23C 3/12

(54) **DETACHABLE TOOL AND PROCESSING TOOL WITH DETACHABLE TOOL**

(30) Priority: 12.09.2023 JP 2023147344
(71) Applicant: Sugino Machine Limited, Namerikawa City, Toyama 936-8577 (JP)
(72) Inventor: YANAGIHARA, Yusuke, Namerikawa City, Toyama, 9368577 (JP); ISHITANI, Akihiro, Namerikawa City, Toyama, 9368577 (JP)
(74) Representative: Global IP Europe Patentanwaltskanzlei

(57) **Abstract**

Provided is a detachable tool (30) detachably attached to a tool mounting hole (21c) of a tool holder (20, 120) including the tool mounting hole (21c), and a retaining body (25) disposed in the tool mounting hole (21c) in a radially inwardly reciprocable manner. The detachable tool (30) includes: a housing (31) supported at a predetermined position of the tool mounting hole (21c), the housing (31) including an elastic body chamber (31f), and a retaining body insertion hole (31c) through which the retaining body (25) is inserted; a slider (36) to which a tip tool (43) having a blade at a basal end portion is mountable, the slider (36) supported by the housing (31) to reciprocate inside the tool mounting hole (21c), the slider (36) having a guide groove (40) extending along the tool mounting hole (21c); an elastic body (39) disposed in the elastic body chamber (31f) to urge the slider (36) toward a basal end; and an anti-rotation body (33) disposed in the housing (31) to be received in the guide groove (40).

## Description

### BACKGROUND

### 1. Technical Field

The present invention relates to a detachable tool and a processing tool to which the detachable tool is mounted.

### 2. Description of the Background

A processing tool to which a tool holder is detachable and a tool is slidable in an axial direction with respect to a shank has been proposed (JP2023-58946 A; hereinafter, Patent Literature 1).

A deburring tool has been proposed which includes a floater, a post and an elastic body (Japanese Utility Model Registration No. 3240218; hereinafter, Patent Literature 2). The floater is inserted into a floater insertion hole, and used for performing back surface deburring. The floater includes a guide groove, an elastic body chamber, and a ring-shaped elastic body receiver. The post includes a head portion and is disposed inside the elastic body chamber. The elastic body is disposed between the head portion and the elastic body receiver inside the elastic body chamber. The elastic body urges the floater toward the basal end.

### BRIEF SUMMARY

In order to replace the floater of Patent Literature 2, it is necessary to remove the tip tool and the post by using a tool and assemble another floater. In addition, the floater of Patent Literature 2 cannot be replaced with a floater that performs front surface deburring.

An object of the present invention is to provide a floater for performing back surface deburring that can be easily replaced with a floater for performing front surface deburring.

A first aspect of the present invention provides a detachable tool detachably attached to a tool mounting hole of a tool holder including the tool mounting hole, and a retaining body disposed in the tool mounting hole in a radially inwardly reciprocable manner, the detachable tool including:
a housing supported at a predetermined position of the tool mounting hole, the housing including,
   an elastic body chamber, and
   a retaining body insertion hole through which the retaining body is inserted;
a slider to which a tip tool having a blade at a basal end portion is mountable, the slider supported by the housing to reciprocate inside the tool mounting hole, the slider having a guide groove extending along the tool mounting hole;
an elastic body disposed in the elastic body chamber to urge the slider toward a basal end; and
an anti-rotation body disposed in the housing to be received in the guide groove.

A second aspect of the present invention provides a processing tool, including:
a tool holder including,
   a tool mounting hole,
   a retaining body disposed in the tool mounting hole in an inwardly reciprocable manner, and
   a pusher reciprocably disposed in the tool mounting hole;
a slide tool detachably mounted in the tool mounting hole, the slide tool including a slide body to which a first tip tool having a blade at a distal end portion is attached, the slide body urged by the pusher toward a distal end to reciprocate in the tool mounting hole, the slide tool having a first guide groove extending along the tool mounting hole on an outer peripheral surface of the slide body to receive the retaining body;
a detachable tool detachably attached to the tool mounting hole instead of the slide tool, the detachable tool including,
   a housing supported at a predetermined position of the tool mounting hole, the housing including,
      an elastic body chamber, and
      a retaining body insertion hole through which the retaining body is inserted;
   a slider to which a tip tool having a blade at a basal end portion is mountable, the slider supported by the housing to reciprocate inside the tool mounting hole, the slider having a second guide groove extending along the tool mounting hole;
   an elastic body disposed in the elastic body chamber to urge the slider toward a basal end; and
   an anti-rotation body disposed in the housing to be received in the second guide groove.

The tip tool is, for example, a cutting tool, a brush, and an abrasive tool. The tip tool may be integral with the slider or the slide body. The tip tool may be fastened to the slider or the slide body by a shrink fit or a collet.

The retaining body insertion hole may be located on an outer peripheral surface of the housing.

The guide groove may be located from a distal end portion to a middle portion of the stem.

The elastic body chamber may extend along the tool mounting hole.

The stem or the inner surface of the elastic body chamber may guide the elastic body.

The stem may be integrally formed with the slide body. The stem may have an external thread at the basal end portion. The stem may have an abutment cylinder. The elastic body receiver may have an internal thread that mates with the external thread of the stem. The elastic body receiver may have a cylindrical inner surface that abuts against the abutment cylinder.

The stem may also have an internal thread at the basal end portion. The stem may have a cylindrical inner surface. The elastic body receiver may have an external thread that mates with the internal thread of the stem. The elastic body receiver may have an abutment cylinder that abuts the cylindrical inner surface of the stem.

The stem may be integrally formed with the elastic body receiver. The stem may be screwed to the slide body. In this case, the slide body and the stem may have cylindrical surfaces abutting each other.

The elastic body receiver may be detachably connected to the stem or the slide body. For example, the elastic body receiver is screwed to the stem. In this case, the elastic body receiver and the stem may have cylindrical surfaces abutting each other.

The elastic body is, for example, a compression coil spring or a tension coil spring. The tension coil spring may be disposed between the basal end of the elastic body chamber and the slider.

The slider may abut against the tool mounting hole.

The slider may slide inside the housing. In this case, the housing may include an elastic body support post disposed in the center of the housing. The elastic body support post has, for example, an elastic body support portion at a distal end. The slider may include a skirt extending toward a basal end relative to the elastic support portion, and an elastic body receiver disposed at the basal end of the skirt. The compressible elastic body is disposed between the elastic body receiver and the elastic body support. The elastic body is, for example, a compression coil spring.

According to the present invention, it is possible to provide a detachable tool for performing back surface deburring that can be easily replaced with a floater for performing front surface deburring.

### BRIEF DESCRIPTION OF DRAWINGS

FIG. 1 is a longitudinal sectional view showing a state in which a detachable tool is attached to and detached from a tool holder according to a first embodiment.
FIG. 2 is an exploded view of the detachable tool according to the first embodiment.
FIG. 3 shows a movement amount with respect to a rotation angle of the detachable tool according to the first embodiment.
FIG. 4 is a longitudinal sectional view showing a method of using a processing tool according to the first embodiment.
FIG. 5 is a longitudinal sectional view showing a state in which a slide tool is attached to and detached from the tool holder according to the first embodiment.
FIG. 6 shows a slide tool according to the first embodiment.
FIG. 7 is a longitudinal sectional view showing a tool holder and a detachable tool according to a second embodiment.

### DETAILED DESCRIPTION

### First Embodiment

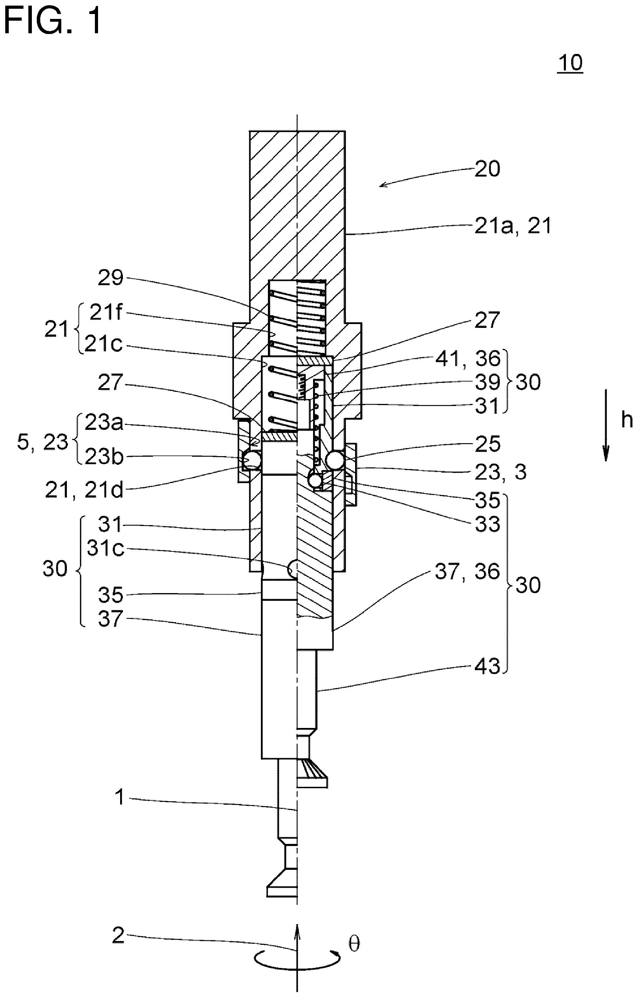

As shown in FIG. 1, a processing tool 10 according to the present embodiment includes a tool holder 20 and a detachable tool 30. The right half of FIG. 1 shows a state in which a trigger 23 is at a machining position 3 and the detachable tool 30 is mounted. The left half of FIG. 1 shows a state in which the trigger 23 is at a detachable position 5 and the detachable tool 30 is removed from the tool holder 20. The detachable tool 30 in FIG. 1 shows a half sectional view.

The tool holder 20 includes a body 21, the trigger 23, a ball (retaining body) 25, a pusher 27, and a spring 29.

The body 21 includes a shank 21a, a tool mounting hole 21c, a ball hole 21d, and a spring chamber 21f. The body 21 is mounted on, for example, a spindle of a machining tool (not shown) and rotates about a central axis 1. The shank 21a, the tool mounting hole 21c and the spring chamber 21f are arranged along the central axis 1. The tool mounting hole 21c is located at the distal end of the body 21. The spring chamber 21f is connected to the tool mounting hole 21c. The ball hole 21d passes radially through the body 21.

The ball 25 is inserted into the ball hole 21d.

The trigger 23, which has a hollow cylindrical shape, is disposed radially outward from the body 21. The trigger 23 includes a holding surface 23a and a relief portion 23b. The trigger 23 reciprocates between the machining position 3 and the detachable position 5. When the trigger 23 is at the machining position 3, the holding surface 23a causes the ball 25 to protrude into the tool mounting hole 21c. When the trigger 23 is at the detachable position 5, the ball 25 is accommodated in the relief portion 23b.

The spring 29 is a compression coil spring. The spring 29 is disposed in the spring chamber 21f. The pusher 27 reciprocates inside the tool mounting hole 21c. The pusher 27 is urged toward the distal end by the spring 29.

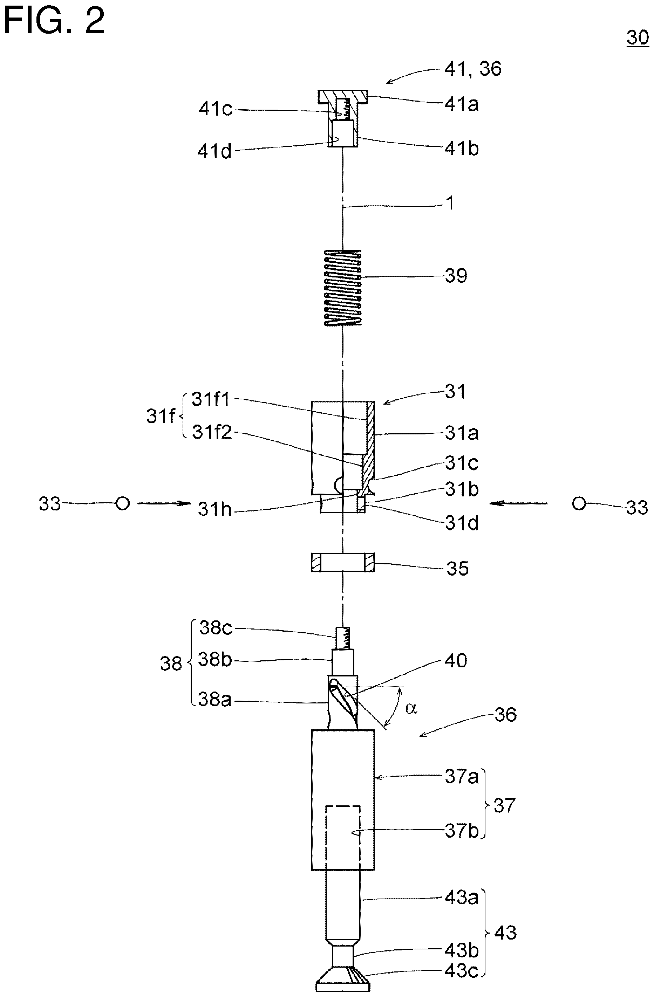

As shown in FIGs. 1 and 2, the detachable tool 30 includes a housing 31, a ball (anti-rotation body) 33, a ball ring 35, a slider 36, and a spring (elastic body) 39. The components constituting the detachable tool 30 are all disposed around the central axis 1.

The housing 31 includes a housing body 31a, a small cylinder portion 31b, a retaining body insertion hole 31c, a ball holding hole 31d, a spring chamber (elastic body chamber) 31f, and a stem hole 31h. The housing 31 has a hollow cylindrical shape. The housing body 31a has an outer cylindrical surface that abuts against the tool mounting hole 21c. The small cylinder portion 31b extends from a distal end of the housing body 31a. The retaining body insertion hole 31c is located on the outer cylindrical surface of the housing body 31a. The retaining body insertion hole 31c, which is hemispherical, has substantially the same diameter as the ball 25. The retaining body insertion hole 31c abuts against the ball 25. The spring chamber 31f, which is cylindrical, opens to a basal end of the housing body 31a. The spring chamber 31f may include a large diameter portion 31f1 and a small diameter portion 31f2. The small diameter portion 31fl is disposed at the distal end of the large diameter portion 31f1. The stem hole 31h extends from the distal end of the housing 31 along the central axis 1. The stem hole 31h connects to the spring chamber 31f.

The ball 33 is inserted into the ball holding hole 31d. The ball ring 35, which is disposed on the small cylinder portion 31b, holds the ball 33.

The slider 36 includes a slide body 37, a stem 38, a guide groove 40, and a spring receiver (elastic body receiver) 41.

The slide body 37 has a right cylindrical shape. The slide body 37 has a slide surface 37a and a tool hole 37b. The slide surface 37a slides with the tool mounting hole 21c. The tool hole 37b is located at a distal end of the slide body 37.

The stem 38 is disposed at the basal end of the slide body 37. The stem 38 has a right cylindrical shape. The stem 38 includes a slide shaft 38a, an abutting cylindrical portion 38b, and an external thread 38c.

A plurality (two in the present embodiment) of guide grooves 40 are formed on the slide shaft 38a rotationally symmetrically with respect to the central axis 1. The guide groove 40 extends spirally about the central axis 1. The guide groove 40 has a lead angle α.

The guide groove 40 may extend linearly along the central axis 1.

The spring receiver 41 is connected to the basal end of the stem 38. The spring receiver 41 includes a receiving portion 41a, a shaft portion 41b, an inner cylindrical portion 41d, and an internal thread 41c. The receiving portion 41a has a diameter larger than an outer diameter of the spring 39. Preferably, the receiving portion 41a slides with the large diameter portion 31f1 of the spring chamber 31f. The shaft portion 41b has an outer diameter smaller than an inner diameter of the spring 39. The outer diameter of the shaft portion 41b is substantially the same as the outer diameter of the slide shaft 38a. The inner cylindrical portion 41d abuts against the abutting cylindrical portion 38b. The internal thread 41c is fastened to the external thread 38c of the stem 38.

When the guide groove 40 is guided by the ball 33, the slider 36 moves back and forth in a spiral shape along the central axis 1 in the housing 31.

A tip tool 43 includes a shank 43a, a reduced-diameter portion 43b, and a blade portion 43c. The blade portion 43c is supported by the shank 43a via the reduced-diameter portion 43b. The blade portion 43c includes a cutting edge facing the basal end. The shank 43a is fastened to the tool hole 37b.

The spring 39 is a compression coil spring. The spring 39 is inserted into a gap between the housing 31 and the stem 38. The spring receiver 41 is fastened to the stem 38 for supporting the spring 39. The spring 39 is guided by the slide shaft 38a, the shaft portion 41b, and the small-diameter portion 31f2. The spring 39 urges the slider 36 toward the basal end.

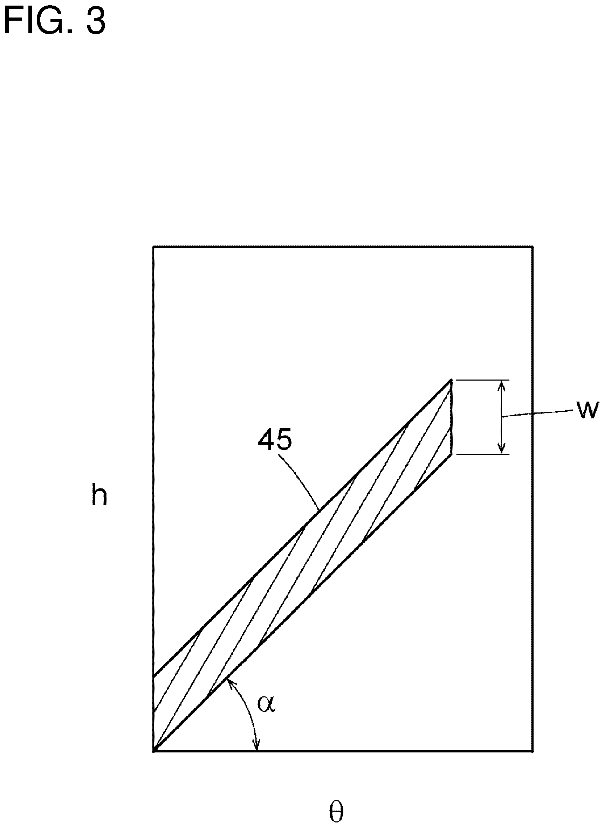

FIG. 3 shows the relationship between the position of the slide body 37 with respect to the housing 31 and the rotation angle. The vertical axis represents an axial displacement amount h (refer to FIG. 1) of the slide body 37, and the cutting direction 2 (refer to FIG. 1) of the slide body 37 is negative. The horizontal axis represents an angular displacement θ (see FIG. 1) of the slide body 37, and the rotation direction of the processing tool 10 (clockwise in the downward direction of FIG. 1) is negative. The slide body 37 moves within a hatched area 45 in FIG. 3. In the hatched area 45, the displacement amount h has a constant displacement width w with respect to any angular displacement θ.

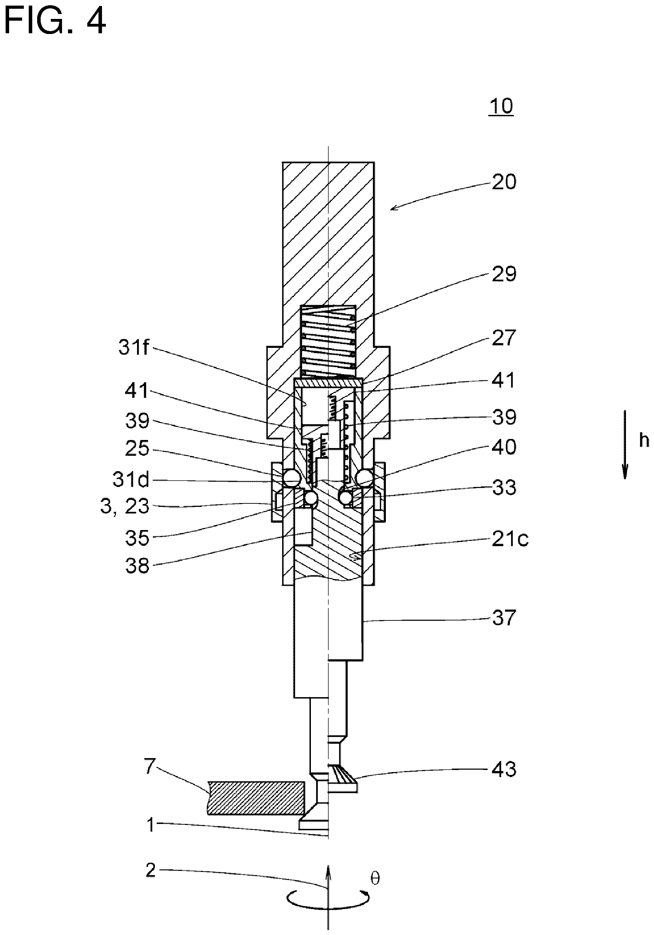

FIG. 4 shows the processing tool 10 in use state to which the detachable tool 30 is attached. The right half of FIG. 4 shows a state in which the slider 36 is located at the basal end. The left half of FIG. 4 shows a state in which the slider 36 moves toward the distal end to remove burrs on the workpiece 7.

The processing tool 10 rotates in the -θ direction. When viewed from the tool holder 20, the slider 36 is moved so that the blade portion 43c comes into contact with the edge of the back surface of the workpiece 7. The processing tool 10 moves in a direction perpendicular to the plane of the paper. The housing 31 is supported in place by the ball 25. The spring 29 is held in a contracted state. The slider 36 is urged toward the basal end by the elastic force of the spring 39. The slider 36 is guided by the guide groove 40. When the height of the edge of the workpiece 7 with which the blade portion 43c abuts changes in accordance with the movement of the processing tool 10, the spring 39 expands and contracts, and the slider 36 slides in the tool mounting hole 21c. Here, the ball 33 and the guide groove 40 guide the slider 36. As the guide groove 40 has the displacement width w and the lead angle α, the slider 36 moves forward and backward in accordance with the magnitude of the cutting torque received by the blade portion 43c.

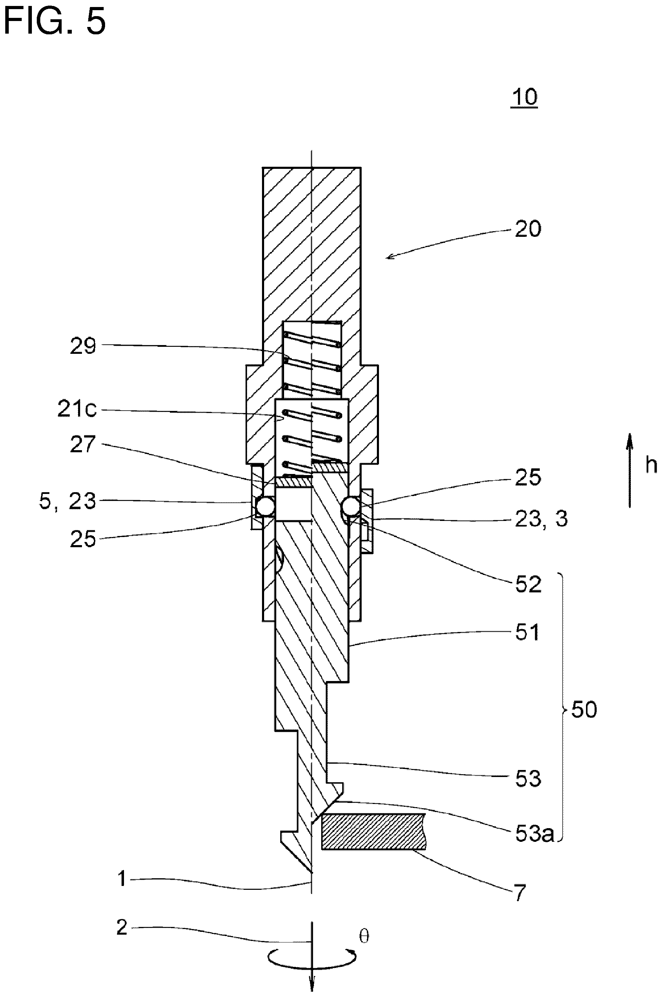

As shown in FIG. 5, a slide tool 50 can be attached to the tool holder 20 in place of the detachable tool 30. Here, the right half of FIG. 5 shows a state in which the slide tool 50 is attached to the tool holder 20 to process the workpiece 7. The left half of FIG. 5 shows a state in which the slide tool 50 is disengaged from the tool holder 20.

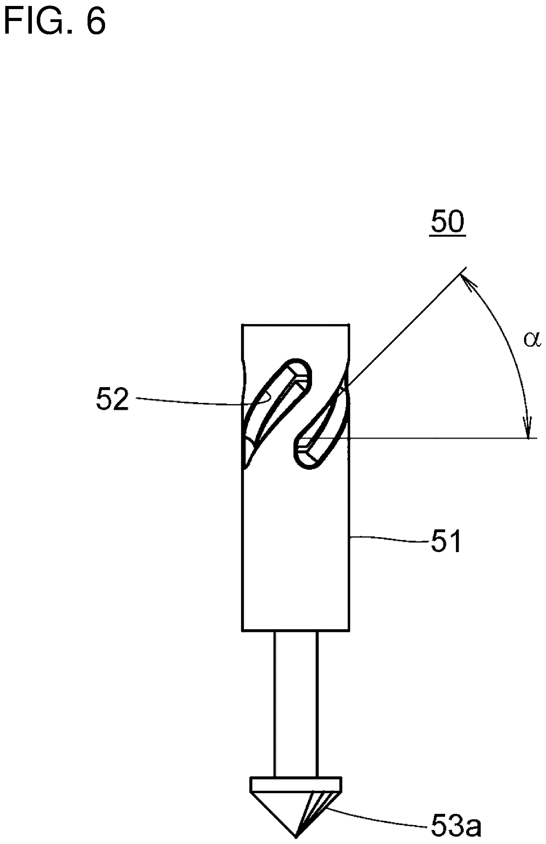

As shown in FIGs. 5 and 6, the slide tool 50 includes a slide body 51, a tip tool 53, and a guide groove 52. The slide body 51, which has a right cylindrical shape, slides in a rotational direction and an axial direction with respect to the tool mounting hole 21c. The tip tool 53 is attached to the slide body 51. The tip tool 53 has a cutting portion 53a. The cutting portion 53a has a cutting edge facing the distal end. The slide body 51 is urged in the distal direction by the pusher 27. The cutting direction 2 of the slide tool 50 is directed downward in FIG. 5.

As shown in FIG. 5, the processing tool 10 rotates as a whole. The processing tool 10 then moves in a direction perpendicular to the paper surface while bringing the tip tool 53 into contact with the workpiece 7. Then, burrs on a side of the tool holder 20 of the workpiece 7, that is, the edge on the front side of the workpiece 7 are removed. When a distance (height) of the workpiece 7 from the tool holder 20 varies, the entire slide tool 50 reciprocates inside the tool mounting hole 21c integrally with the pusher 27 in accordance with the height of the workpiece 7. At this time, the ball 25 and the guide groove 52 guide the slide body 51.

In FIG. 6, the slide tool 50 receives a cutting resistance in a counterclockwise direction when viewed from the top to the bottom. As a whole, the guide groove 52 draws a spiral toward the opposite direction of the cutting direction 2 (upward in FIG. 6) as it advances in the opposite direction (+θ) of the rotation direction of the processing tool 10. The other structure of the guide groove 52 is substantially the same as the guide groove 40 of the detachable tool 30. Note that the ball 25 is inserted into the guide groove 52.

The processing tool 10 according to the present embodiment provides the following advantageous effects.

When attaching the detachable tool 30, the ball 25 holds the housing 31 in place and the spring 29 does not substantially work. The spring 39 disposed inside the detachable tool 30 urges the slide body 37 toward the basal end. The processing tool 10 can remove burrs on the back surface of the workpiece 7 when viewed from the tool holder 20. Simply changing the position of the trigger 23 from the machining position 3 to the detachable position 5 allows the detachable tool 30 to be easily detached from the tool holder 20.

Then, when the slide tool 50 is attached to the tool holder 20 in place of the detachable tool 30, the ball 25 is inserted into the guide groove 52, and the pusher 27 urges the slide tool 50 toward the distal end via the spring 29. The processing tool 10 can remove burrs on the front surface of the workpiece 7 when viewed from the tool holder 20. According to the processing tool 10 of the present embodiment, the process of removing the burr on the front surface of the workpiece 7 and the process of removing the burr on the back surface of the workpiece 7 can be easily switched only by replacing the tool to be mounted.

The slide body 37 abut against the tool mounting hole 21c. The total runout of the slide body 37 is thus suppressed.

Further, the outer cylindrical surface of the housing 31 abuts against the tool mounting hole 21c. The assembling accuracy of the detachable tool 30 is thus improved.

Further, the receiving portion 41a, which is the rear end portion of the slider 36, slides with the spring chamber 31f. The front end portion and the rear end portion of the slider 36 are then guided in the tool mounting hole 21c, so that the total runout of the slide body 37 is further suppressed.

The spring chamber 31f opens to the rear end of the housing 31, and the spring receiver 41 is detachable from the stem 38. By removing the spring receiver 41 from the stem 38, the spring 39 can thus be easily replaced. Further, the spring constant of the spring 39 determines the strength of the blade portion 43c abutting the workpiece 7. According to the present embodiment, the spring 39 can be easily changed to another spring 39 having a different spring constant. The deburring strength can thus be easily changed.

The slide body 37 is disposed on the distal end side of the housing 31. The slide body 37 slides with the tool mounting hole 21c. The housing 31 is supported in contact with the tool mounting hole 21c. The spring 39, the stem 38 connected to the slide body 37, and the spring receiver 41 are accommodated in the housing 31. The detachable tool 30 can thus be compact. The ball 33 is incorporated in the housing 31. The guide groove 40 is located on the stem 38. The detachable tool 30 is thus further configured to be compact. The entire shape of the part to be inserted into the tool mounting hole 21c of the detachable tool 30 becomes a simple right cylindrical shape. The shape of the slide tool 50 is thus also a simple right cylindrical shape.

### Second Embodiment

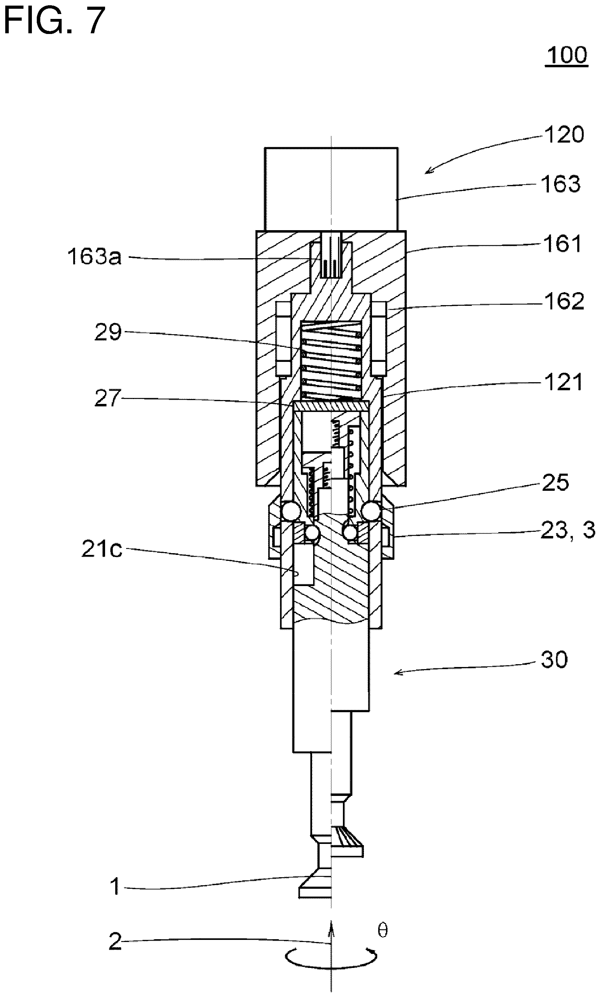

As shown in FIG. 7, a processing tool 100 according to the present embodiment includes a tool holder 120 and a detachable tool 30. Instead of the detachable tool 30, the slide tool 50 can be attached to the tool holder 120.

The tool holder 120 includes a case 161, a body 121, a spindle bearing 162, a spindle motor 163, a ball 25, and a trigger 23.

The case 161 has a hollow cylindrical shape. The case 161 is mounted on, for example, an industrial robot. The body 121 is supported by the case 161 via the spindle bearing 162. The body 121 is a spindle. The spindle motor 163 is disposed in the case 161. The spindle motor 163 has an output shaft 163a. For example, the output shaft 163a is connected to the body 121 by serration. The body 121 has substantially the same configuration as the body 21 of the first embodiment.

### Reference Signs List

- 20, 120: Tool holder
- 21c: Tool mounting slot
- 25: Ball (Holding member)
- 30: Detachable tool
- 31: Housing
- 33: Ball (Anti-rotation body)
- 36: Slider
- 40: Guide groove
- 39: Elastic body

## Claims

1. A detachable tool (30) detachably attached to a tool mounting hole (21c) of a tool holder (20, 120) including the tool mounting hole (21c), and a retaining body (25) disposed in the tool mounting hole (21c) in a radially inwardly reciprocable manner, the detachable tool (30) comprising:
a housing (31) supported at a predetermined position of the tool mounting hole (21c), the housing (31) including,
an elastic body chamber (31f), and
a retaining body insertion hole (31c) through which the retaining body (25) is inserted;
a slider (36) to which a tip tool (43) having a blade at a basal end portion is mountable, the slider (36) supported by the housing (31) to reciprocate inside the tool mounting hole (21c), the slider (36) having a guide groove (40) extending along the tool mounting hole (21c);
an elastic body (39) disposed in the elastic body chamber (31f) to urge the slider (36) toward a basal end; and
an anti-rotation body (33) disposed in the housing (31) to be received in the guide groove (40).

2. The detachable tool (30) according to claim 1, wherein
the slider (36) includes a slide body (37) disposed at a distal end portion of the housing (31) to slide within the tool mounting hole (21c).

3. The detachable tool (30) according to claim 1 or 2, wherein
the housing (31) has a stem hole (31h) connected to the elastic body chamber (31f),
the slider (36) includes,
a stem (38) configured to pass through the stem hole (31h), and
an elastic body receiver (41) disposed inside the elastic body chamber (31f), the elastic body receiver (41) connected to a basal end portion of the stem (38), and
the elastic body (39) is disposed between the housing (31) and the elastic body receiver (41).

4. The detachable tool (30) according to any one of claims 1 to 3, wherein
the stem (38) includes the guide groove (40).

5. The detachable tool (30) according to any one of claims 1 to 4, wherein
the housing (31) comes into contact with an inner surface of the tool mounting hole (21c).

6. The detachable tool (30) according to any one of claims 1 to 5, wherein
the elastic body receiver (41) slides inside the elastic body chamber (31f).

7. The detachable tool (30) according to any one of claims 1 to 5, wherein
the elastic body chamber (31f) is open to a basal end portion of the housing (31), and
the elastic body receiver (41) is detachably attachable to the slider (36).

8. A processing tool (10, 100), comprising:
a tool holder (20, 120) including,
a tool mounting hole (21c),
a retaining body (25) disposed in the tool mounting hole (21c) in an inwardly reciprocable manner, and
a pusher (27) reciprocably disposed in the tool mounting hole (21c);
a slide tool (50) detachably mounted in the tool mounting hole (21c), the slide tool (50) including a slide body (51) to which a first tip tool (53) having a blade at a distal end portion is attached, the slide body (51) urged by the pusher (27) toward a distal end to reciprocate in the tool mounting hole (21c), the slide body (51) having a first guide groove (52) extending along the tool mounting hole (21c) on an outer peripheral surface of the slide body (51) to receive the retaining body (25); and
a detachable tool (30) detachably attached to the tool mounting hole (21c) instead of the slide tool (50), the detachable tool (30) including,
a housing (31) supported at a predetermined position of the tool mounting hole (21c), the housing (31) including,
an elastic body chamber (31f), and
a retaining body insertion hole (31c) through which the retaining body (25) is inserted;
a slider (36) to which a tip tool (43) having a blade at a basal end portion is mountable, the slider (36) supported by the housing (31) to reciprocate inside the tool mounting hole (21c), the slider (36) having a second guide groove (40) extending along the tool mounting hole (21c);
an elastic body (39) disposed in the elastic body chamber (31f) to urge the slider (36) toward a basal end; and
an anti-rotation body (33) disposed in the housing (31) to be received in the second guide groove (40).
